# EUROPÄISCHE PATENTANMELDUNG

(11) **EP 1 894 493 A1**
(43) Veröffentlichungstag der Anmeldung: **05.03.2008**
(21) Anmeldenummer: 06120060.6
(22) Anmeldetag: 04.09.2006
(51) Int. Cl.: A47C 7/74, G05D 23/19, B60N 2/56

(54) **Heizkissenvorrichtung**

(71) Anmelder: EFG Energie für Gebäude, 87600 Kaufbeuren (DE)
(72) Erfinder: Sandler, Martin, 87600 Kaufbeuren (DE)
(74) Vertreter: Barth, Stephan Manuel

(57) **Zusammenfassung**

Die vorliegende Erfindung betrifft eine Heizkissenvorrichtung mit mindestens einer flächigen Heizmatteneinrichtung (11); einer ersten Schicht (12), welche auf einer oberen Oberfläche der Heizmatteneinrichtung (11) aufgebracht ist und eine an der Oberseite der ersten Schicht (12) befindliche Sitzfläche (100) von der Heizmatteneinrichtung (11) im unbelasteten Zustand wärmeisolierend trennt; wobei die erste Schicht (12) kompressibel eingerichtet ist, so dass eine Belastung, welche auf einen Bereich der Sitzfläche (100) einwirkt, einen Abstand (d) des Bereichs der Sitzfläche (100) zu der Heizmatteneinrichtung (11) verringert und somit der belastete Bereich der Sitzfläche (100) nicht wärmeisolierend von der Heizmatteneinrichtung (11) getrennt ist; und einer zweiten Schicht (10), welche auf einer unteren Oberfläche der Heizmatteneinrichtung (11) aufgebracht ist und eine an der Unterseite der zweiten Schicht (10) befindliche Auflagefläche (101) von der Heizmatteneinrichtung (11) wärmeisolierend trennt, wobei die zweite Schicht (10) durch die Belastung nicht wesentlich komprimierbar ist.

## Beschreibung

Die vorliegende Erfindung betrifft eine Heizkissenvorrichtung.

Obwohl die vorliegende Erfindung anhand einer Sitzheizung für ein Kirchengestühl beschrieben wird, ist die vorliegende Erfindung nicht darauf beschränkt, sondern betrifft allgemein Heizkissenvorrichtungen.

Kirchenschiffe von Kirchen der letzten Jahrhunderte, aber auch moderner Bauart, lassen sich nur unter sehr hohem Energieaufwand auf für Menschen angenehme Temperaturen von oberhalb von 15°C aufheizen. Da die Kirchen nur für eine begrenzte Anzahl an Stunden pro Woche genutzt werden, wird aus ökologischer Sicht darauf verzichtet, die Kirche permanent zu beheizen. In vielen Kirchenräumlichkeiten sind Heizstrahler unterhalb der Sitzflächen des Kirchengestühls und zum Teil an den Wänden des Kirchenschiffs angebracht. Diese Heizstrahler werden nur während der Liturgie eingeschaltet, um Besucher der liturgischen Veranstaltung zu wärmen. Diese Wärmestrahler sind jedoch sehr ineffizient, weil sie entweder durch die Sitzfläche von dem Besucher isoliert sind und im Wesentlichen nur dessen Füße erwärmen oder über einen sehr großen Raumwinkel abstrahlen, wenn sie an der Wand angebracht sind.

Es ist eine Aufgabe der vorliegenden Erfindung, eine Heizung bereitzustellen, welche in einem lokal begrenzten Bereich Wärme abgibt, wenn in diesem Bereich jemand oder etwas geheizt werden soll.

Die vorliegende Aufgabe wird durch die erfindungsgemäße Heizkissenvorrichtung mit den Merkmalen des Schutzanspruchs 1 gelöst.

Die Heizkissenvorrichtung weist mindestens eine flächige Heizmatteneinrichtung auf. Eine erste Schicht ist auf einer oberen Oberfläche der Heizmatteneinrichtung aufgebracht und trennt wärmeisolierend eine an der Oberseite der ersten Schicht befindliche Sitzfläche von der Heizmatteneinrichtung, wenn die erste Schicht in unbelastetem Zustand ist. Die erste Schicht ist kompressibel eingerichtet, so dass eine Belastung, welche auf einen Bereich der Sitzfläche einwirkt, einen Abstand des Bereichs der Sitzfläche zu der Heizmatteneinrichtung verringert und somit der belastete Bereich der Sitzfläche nicht wärmeisolierend von der Heizmatteneinrichtung getrennt ist. Eine zweiten Schicht ist auf einer unteren Oberfläche der Heizmatteneinrichtung aufgebracht und trennt wärmeisolierend eine an der Unterseite der zweiten Schicht befindliche Auflagefläche von der Heizmatteneinrichtung, wobei die zweite Schicht durch die Belastung nicht wesentlich komprimierbar ist.

Nicht wesentlich komprimiert bedeutet, dass die Dicke der Schicht nur um wenige, maximal zwanzig Prozent durch die Belastung verringerbar bzw. komprimierbar ist. Die Belastung bezeichne eine mechanische Kraft oder einen Druck, welcher auf die Sitzfläche und damit die erste Schicht wirkt.

Die der Erfindung zugrunde liegende Idee besteht darin, dass ein auf der Sitzfläche ruhendes Objekt dazu führt, dass vorwiegend die erste Schicht zusammengedrückt wird. Mit aufgrund der abnehmenden Dicke sinkt der Wärmewiderstand der ersten Schicht und der Wärmestrom von der Heizmatteneinrichtung zu der zu wärmenden Sitzfläche steigt an. Wird das Objekt von der zu wärmenden Sitzfläche entfernt, nimmt die erste Schicht aufgrund seiner elastischen Eigenschaft wieder die ursprüngliche Dicke an und isoliert die Heizmatteneinrichtung von der Umgebung. Die zweite Schicht wird aufgrund ihrer geringen Kompressibilität durch das Objekt im Wesentlichen nicht komprimiert, behält seine Dicke und damit auch seine wärmeisolierende Eigenschaft bei.

In den Unteransprüchen finden sich vorteilhafte Weiterbildungen und Verbesserungen der im Anspruch 1 angegebenen Heizkissenvorrichtung.

Eine Weiterbildung der Vorrichtung sieht vor, dass die Belastung durch ein auf der Sitzfläche ruhendes oder sich ein an die Sitzfläche anlehnendes Objekt ausgeübt wird.

Eine Weiterbildung der Vorrichtung sieht vor, dass die Stromregelungseinrichtung in der zweiten Schicht angeordnet ist, so dass die Stromregelungseinrichtung nicht durch die erste Schicht und die Heizmatteneinrichtung hindurch taktil erfassbar ist.

Gemäß einer Weiterbildung weist die Vorrichtung ein oder mehreren Wärmesensoren auf, welche in und/oder an der Heizmatteneinrichtung angeordnet sind, und mit einer Stromregelungseinrichtung verbunden sind, welche zum Regeln einer Temperatur der Heizmatte auf eine Soll-Temperatur basierend auf Signalen des und/oder der Wärmesensoren und mittels der steuerbaren Stromversorgungseinrichtung eingerichtet ist.

Gemäß einer Weiterbildung weist die Stromregelungseinrichtung einen bistabilen wärmeempfindlichen Schalter auf, welcher eine Stromzufuhr oberhalb einer vorgegebenen Temperatur unterbricht und unterhalb der vorgegebenen Temperatur leitend geschaltet ist.

Eine Weiterbildung der Vorrichtung sieht vor, dass eine Sicherheitseinrichtung vorgesehen ist, welche die Stromversorgung deaktiviert, wenn eine kritische Temperatur in der Heizmatteneinrichtung überschritten wird.

Eine Weiterbildung der Vorrichtung sieht vor, dass eine oberste Oberfläche der Heizkissenvorrichtung durch eine Hülle umgeben ist. Dabei kann die Hülle eine Textilie aufweisen und/oder entfernbar angebracht sein.

Eine Weiterbildung der Vorrichtung sieht vor, dass die erste Schicht Fliess oder ein anderes Polyester und/oder die zweite Schicht Polyetherschaumstoff und/oder die Heizmatteneinrichtung einen Filzträger, einen Schaumstoff und Heizelemente aufweist.

Eine Weiterbildung der Vorrichtung sieht vor, dass die Heizmatteneinrichtung ein Stromversorgungskabel aufweist, welches seitlich aus der Heizkissenvorrichtung herausgeführt angeordnet ist.

Eine Weiterbildung der Vorrichtung sieht vor, dass ein Kanal in der zweiten Schicht vorgesehen ist, in welchem mindestens eines der Stromversorgungskabel führbar ist, so dass die Stromversorgungskabel nicht durch die erste Schicht und die Heizmatteneinrichtung hindurch taktil erfassbar sind. Somit wird eine sitzende Person nicht durch die Führung der Kabel gestört.

Eine Weiterbildung der Vorrichtung sieht vor, dass mehrere Heizmatteneinrichtungen vorgesehen sind und die Stromversorgungskabel aller Heizmatteneinrichtungen gebündelt seitlich aus der Heizkissenvorrichtung herausgeführt angeordnet sind.

Eine Weiterbildung sieht vor, dass zwischen der ersten und zweiten Schicht mehrere Heizmatteneinrichtungen nebeneinander angeordnet sind.

Ausführungsbeispiele der Erfindung sowie vorteilhafte Weiterbildungen sind in den Figuren der Zeichnungen schematisch dargestellt und in der Beschreibung näher erläutert.

In den Figuren zeigen:
- Fig. 1: eine Querschnittsansicht einer Ausführungsform der vorliegenden Erfindung;
- Fig. 2: eine Querschnittsansicht der Ausführungsform der vorliegenden Erfindung, welche durch ein Objekt belastet wird; und
- Fig. 3: eine Aufsicht auf die in Fig. 1 dargestellte Ausführungsform; und
- Fig. 4: ein Längsschnitt der in Fig. 1 dargestellten Ausführungsform; und
- Fig. 5: eine weitere Querschnittsansicht der Ausführungsform.

In den Figuren bezeichnen gleiche Bezugszeichen gleiche oder funktionsgleiche Komponenten.

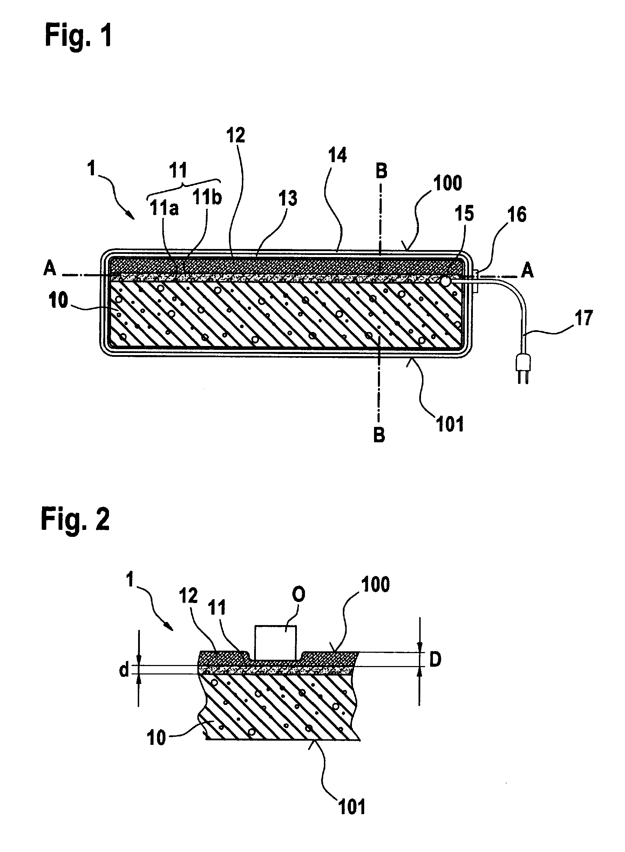

In Fig. 1 ist eine Querschnittsansicht einer Ausführungsform der vorliegenden Erfindung dargestellt. Eine Heizmatteneinrichtung 11 ist zwischen einer ersten Schicht 12 und einer zweiten Schicht 10 angeordnet.

Die erste Schicht 12 ist vorzugsweise aus einem Polstermaterial, welches elastisch ist und ein geringes Elastizitätsmodul aufweist. Oberhalb einer der Heizmatteneinrichtung 11 abgewandten Oberfläche der ersten Schicht 10 befindet sich die Sitzfläche 100.

Die zweite Schicht 10 weist ein hohes Elastizitätsmodul und damit eine große Steifigkeit auf. Gering und hoch seien hierbei wie folgt zu verstehen. Eine typische Kraft oder Belastung, welche auf die Sitzfläche einwirkt wirkt, drückt die erste Schicht 12 zusammen, die zweite Schicht 10 jedoch nur in geringem Umfang. Eine Auflagefläche 101 der Heizkissenvorrichtung 1 befindet sich unterhalb einer Unterseite der zweiten Schicht 10 und damit abgewandt von der Heizmatteneinrichtung 11.

Die erste Schicht 12 und die zweite Schicht 10 weisen beide Materialien mit einer geringen spezifischen Wärmeleitfähigkeit auf. Aufgrund der großen Dicke der Schichten 10, 12 und der geringen spezifischen Wärmeleitfähigkeit wird somit die Heizmatteneinrichtung 11 von der Umgebung isoliert, insbesondere von den großen Flächen der Auflagefläche 101 und der Sitzfläche 100.

Mit Bezug zu Fig. 2 wird beschrieben, wie eine lokal begrenzte Beheizung eines Objekts O erfolgt. Das schematisch dargestellte Objekt B kann z.B. ein Mensch sein, welcher auf der Oberfläche 100 der Heizkissenvorrichtung 1 steht, sitzt oder liegt und somit durch seine Gewichtskraft auf das Heizelement 1 einwirkt oder sich an die Heizkissenvorrichtung 1 anlehnt, wenn die Heizkissenvorrichtung z.B. an einer Rückenlehne an einer Sitzgelegenheit befestigt ist. Andere Objekte sind z.B. Tiere oder kälteempfindliche Waren.

Exemplarisch für die oben genannten Fälle wird nachfolgend mit Bezug auf die Fig. 2 eine auf der Heizkissenvorrichtung 1 sitzenden Person beschrieben. Wie erwähnt, weist die zweite Schicht 10 ein großes Elastizitätsmodul auf, und daher wird dessen Dicke nicht durch die Gewichtskraft der Person B reduziert. Typischerweise verringert sich die Dicke der zweiten Schicht 10 erst bei einem Druck von sieben bis acht Kilopascal auf 60 % der unbelasteten Dicke. Dies hat zur Folge, dass die wärmeisolierende Eigenschaft der Schicht 10 aufrechterhalten bleibt, auch wenn eine Person B auf dem Heizelement 1 sitzt, da die Person in etwa nur einen Druck von vier Kilopascal auf die Sitzfläche ausübt.

Die erste Schicht 12 weist im unbelasteten Zustand die erste Dicke D auf. Durch die sitzende Person wird die Schicht 12 in dem Bereich, wo die Person B sitzt, aufgrund des geringen Elastizitätsmoduls der Schicht 12 auf die zweite Dicke d zusammengedrückt. Die zweite Dicke d weist nur einen Bruchteil der ersten Dicke D auf, höchstens die Hälfte der ersten Dicke D. Dies reduziert die isolierende Wirkung der Schicht 12 in dem zusammengedrückten Bereich. In einfacher Näherung kann angenommen werden, dass die wärmeisolierende Wirkung proportional zu der Dicke der Schicht 12 ist, da die Wärmeleitfähigkeit im Wesentlichen unabhängig von der Kompression des Materials der Schicht 12 ist. Auf diese Weise wird die sitzende Person B von der Heizmatteneinrichtung 11 gewärmt. Die Bereiche, auf denen keine Person sitzt, werden nicht zusammengedrückt und isolieren aufgrund ihrer größeren Dicke weiterhin die Heizmatteneinrichtung 11 von der Umgebung. Steht die Person B auf, dehnt sich die Schicht 12 in dem zuvor zusammengedrückten Bereich wieder auf die erste Dicke D aus. Damit wird die Heizmatte 11 auch in diesem Bereich wieder von der Umgebung isoliert.

Somit ermöglicht diese Ausführungsform der vorliegenden Erfindung, lokal begrenzt ein Objekt, also in dem oben erläuterten Fall die sitzende Person B, zu wärmen und in anderen Bereichen durch eine Isolierung der Heizmatteneinrichtung 11 Energie einzusparen.

Im Folgenden werden weitere Ausgestaltungen der zuvor beschriebenen Ausführungsform beschrieben, welche auch in vielfältiger Form abgewandelt werden können.

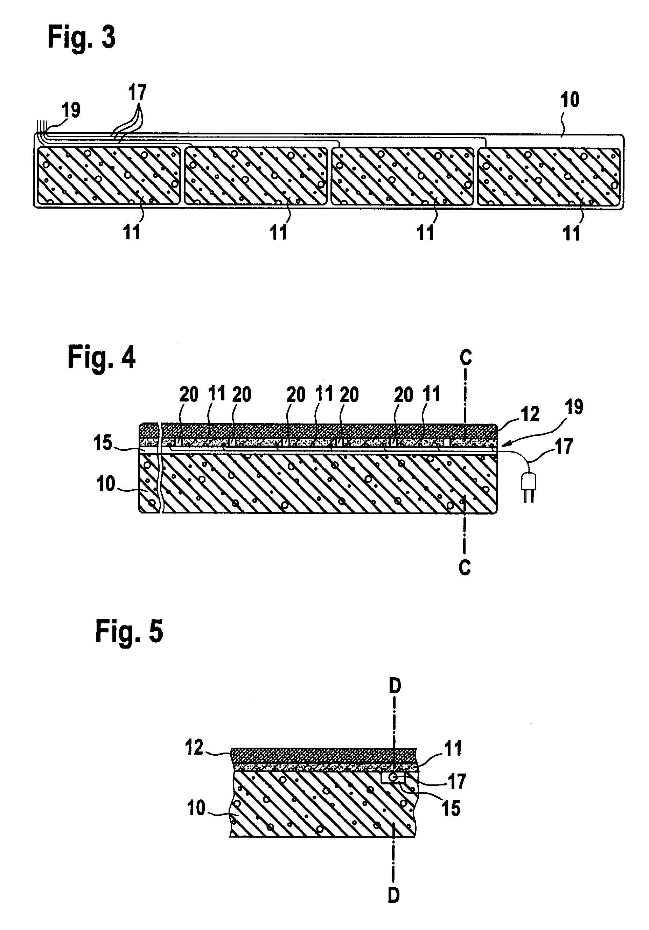

Figur 3 zeigt eine Aufsicht auf die Ausführungsform zu Figur 1 entlang der in Figur 1 eingezeichneten Schnittfläche A-A. Auf der zweiten Schicht 10 können eine oder mehrere Heizmatteneinrichtungen 11 angeordnet sein. Die Heizmatteneinrichtungen 11 können z.B. aufgeklebt werden.

Figur 4 zeigt einen Längsschnitt entlang der vertikalen Fläche B-B, in Figur 1 angegeben. Hierbei ist zu erkennen, dass mehrere Heizmatteneinrichtungen 11 nebeneinander zwischen der ersten und zweiten Schicht 12, 10 angeordnet werden können. Dabei können Zwischenräume 20 zwischen den einzelnen Heizmatteneinrichtungen 11 auftreten. Unterhalb der Heizmatten ist vorteilhafterweise ein schmaler Kanal 15 angeordnet. Der Kanal 15 ist in einer weiteren Schnittansicht, entlang der Linie C-C in Figur 5 dargestellt. Der schmale Kanal 15 ist unter anderem geeignet, die Zuleitungen 17 zu den einzelnen Heizmatteneinrichtungen 11 aufzunehmen. Die einzelnen Zuleitungen 17 können innerhalb des Kanals gebündelt oder zu einer einzigen Zuleitung verbunden werden. Vorteilhafterweise werden die Zuleitungen 17 seitlich durch eine Kabelöffnung 19 aus der Heizkissenvorrichtung heraus herausgeführt, um sie mit einem Netzanschluss oder anders gearteten Primärquelle zu verbinden.

Die Heizmatteneinrichtung 11 weist vorzugsweise ein oder mehrere Heizelemente 11a auf, welche in einem nicht brennbaren Material, z.B. einem Filzträger 11b, eingebettet sind. Die Heizelemente 11a sind mit einer Stromregelungseinrichtung 15 verbunden. Durch Regelung des Stromdurchflusses lässt sich die Temperatur der Heizmatteneinrichtung 11 einstellen. Vorzugsweise sind ein oder mehrere Temperatursensoren in der Heizmatteneinrichtung 11 angeordnet. Signale dieser Temperatursensoren werden der dann rückkoppelnden Stromregelungseinrichtung 15 zugeführt, welche den Strom so nachregelt, dass sich eine konstante Temperatur der Heizmatteneinrichtung 11 einstellt. Eine weitere bevorzugte Ausführungsform sieht eine bistabile Stromregelungseinrichtung 15 vor, z.B. mittels von Bimetallschaltern, welche den Strom ansprechend auf die aktuelle Temperatur ab- bzw. anschalten, wenn die Solltemperatur unter- bzw. überschritten wird.

Eine Sicherheitseinrichtung überprüft die Temperatur der Heizmatte und schaltet bei Überschreiten einer kritischen Temperatur die Stromzufuhr zu den Heizelementen 11b ab. Dies verhindert einen möglichen Brand aufgrund einer nicht abgeschalteten und/oder einer defekten Heizmatteneinrichtung 11. Die Sicherheitseinrichtung kann sich einerseits eines Temperatursensors bedienen und/oder mittels eines passiven Bauteils, wie z.B. einem Bimetallschalter, bei Überschreiten der kritischen Temperatur ein Trennen von der Stromversorgung ermöglichen.

Vorteilhafterweise wird die Stromregelungseinrichtung 15 und falls vorhanden weitere Elektronik in der zweiten Schicht 10 eingebettet. Die kann zum Beispiel in dem zuvor genannten Kanal 15 erfolgen. Somit bemerkt eine sitzende Person B nicht einen unter ihr befindliche Zuleitungsführung bzw. Stromregelungseinrichtung 15.

Die erste Schicht 12 kann durch ein Polstermaterial oder ein watteartiges Material gebildet werden, wie z.B. einem Fliess oder Polyester. Die zweite Schicht 10 wird aus einem sehr steifen Material gebildet und kann z.B. Polyetherschaumstoff aufweisen. Vorzugsweise ist die Dicke der zweiten Schicht 10 deutlich größer, und weist mindestens das Zweifache der Dicke der ersten Schicht 12 auf.

Das erste Heizelement 1 kann eine Textilie 14 aufweisen, welche die erste und zweite Schicht 12, 10 sowie die Heizmatteneinrichtung 11 umschließt. Vorzugsweise ist diese Textilie 14 entfern- und/oder waschbar. Z.B. kann an der Textilie 14 ein Reißverschluss 16 angebracht werden, mit welchem sich die Textilie 14 öffnen lässt.

Eine weitere Ausführungsform sieht vor, eine Schutzhülle 13 um die erste und zweite Schicht 10, 12 und die Heizmatte 11 anzuordnen, welche nicht entfernbar ist. Die Textilie 14 wird dann über die Schutzhülle 13 gezogen.

### Bezugszeichenliste

- d: zweite Dicke
- D: erste Dicke
- O: Objekt
- 1: Heizkissenvorrichtung
- 10: zweiten Schicht
- 11: Heizmatteneinrichtung
- 11a: Heizelement
- 11b: Filzträger
- 12: erste Schicht
- 13: Schutzhülle
- 14: Textilie
- 15: Stromregelungseinrichtung
- 16: Reißverschluss
- 17: Anschlusskabel
- 19: Kabelöffnung
- 100: Sitzfläche
- 101: Auflagefläche

## Patentansprüche

1. Heizkissenvorrichtung mit:
mindestens einer flächigen Heizmatteneinrichtung (11);
einer ersten Schicht (12), welche auf einer oberen Oberfläche der Heizmatteneinrichtung (11) aufgebracht ist und eine an der Oberseite der ersten Schicht (12) befindliche Sitzfläche (100) von der Heizmatteneinrichtung (11) im unbelasteten Zustand wärmeisolierend trennt;
wobei die erste Schicht (12) kompressibel eingerichtet ist, so dass eine Belastung, welche auf einen Bereich der Sitzfläche (100) einwirkt, einen Abstand (d) des Bereichs der Sitzfläche (100) zu der Heizmatteneinrichtung (11) verringert und somit der belastete Bereich der Sitzfläche (100) nicht wärmeisolierend von der Heizmatteneinrichtung (11) getrennt ist; und
einer zweiten Schicht (10), welche auf einer unteren Oberfläche der Heizmatteneinrichtung (11) aufgebracht ist und eine an der Unterseite der zweiten Schicht (10) befindliche Auflagefläche (101) von der Heizmatteneinrichtung (11) wärmeisolierend trennt, wobei die zweite Schicht (10) durch die Belastung nicht wesentlich komprimierbar ist.

2. Heizkissenvorrichtung nach Anspruch 1, **dadurch gekennzeichnet, dass** die Belastung durch ein auf der Sitzfläche (100) ruhendes oder sich ein an die Sitzfläche (100) anlehnendes Objekt (O) ausgeübt wird.

3. Heizkissenvorrichtung nach Anspruch 3, **dadurch gekennzeichnet, dass** eine Stromregelungseinrichtung (15) in der zweiten Schicht (10) angeordnet ist, so dass die Stromregelungseinrichtung (15) nicht durch die erste Schicht (12) und die Heizmatteneinrichtung (11) hindurch taktil erfassbar ist.

4. Heizkissenvorrichtung nach Anspruch 3, mit einem oder mehreren Wärmesensoren, welche in und/oder an der Heizmatteneinrichtung (11) angeordnet sind, und mit der Stromregelungseinrichtung (15) verbunden sind, welche eingerichtet ist, zum Regeln des Stroms basierend auf Signalen des und/oder der Wärmesensoren eine Temperatur gleich einer Soll-Temperatur einzustellen.

5. Heizkissenvorrichtung nach mindestens einem der vorhergehenden Ansprüche 3, wobei die Stromregelungseinrichtung (15) einen bistabilen wärmeempfindlichen Schalter aufweist, welcher eingerichtet ist eine Stromzufuhr oberhalb einer vorgegebenen Temperatur zu unterbrechen und unterhalb der vorgegebenen Temperatur leitend zuschalten.

6. Heizkissenvorrichtung nach mindestens einem der vorhergehenden Ansprüche, **dadurch gekennzeichnet, dass** eine Sicherheitseinrichtung vorgesehen ist, welche die Stromversorgung deaktiviert, wenn eine kritische Temperatur in der Heizmatteneinrichtung (11) überschritten wird.

7. Heizkissenvorrichtung nach mindestens einem der vorhergehenden Ansprüche, **dadurch gekennzeichnet, dass** die Heizkissenvorrichtung (1) von einer Hülle (14) umgeben ist.

8. Heizkissenvorrichtung nach mindestens einem der vorhergehenden Ansprüche, **dadurch gekennzeichnet, dass** die Hülle (14) entfernbar angebracht ist und/oder eine Textilie aufweist.

9. Heizkissenvorrichtung nach mindestens einem der vorhergehenden Ansprüche, **dadurch gekennzeichnet, dass** die erste Schicht (12) ein Fliess oder ein Polyester aufweist.

10. Heizkissenvorrichtung nach mindestens einem der vorhergehenden Ansprüche, **dadurch gekennzeichnet, dass** die zweite Schicht (10) Polyetherschaumstoff aufweist.

11. Heizkissenvorrichtung nach mindestens einem der vorhergehenden Ansprüche, **dadurch gekennzeichnet, dass** die Heizmatteneinrichtung (11) einen Filzträger (11b) und/oder einen Schaumstoff und Heizelemente (11a) aufweist.

12. Heizkissenvorrichtung nach mindestens einem der vorhergehenden Ansprüche, **dadurch gekennzeichnet, dass** die Heizmatteneinrichtung (11) ein Stromversorgungskabel (17) aufweist, welches seitlich aus der Heizkissenvorrichtung herausgeführt angeordnet ist.

13. Heizkissenvorrichtung nach Anspruch 12, **dadurch gekennzeichnet, dass** mehrere Heizmatteneinrichtungen (11) vorgesehen sind und die Stromversorgungskabel (17) aller Heizmatteneinrichtungen (11) gebündelt seitlich aus der Heizkissenvorrichtung herausgeführt angeordnet sind.

14. Heizkissenvorrichtung nach mindestens einem der vorhergehenden Ansprüche, **dadurch gekennzeichnet, dass** ein Kanal (15) in der zweiten Schicht (10) vorgesehen ist, in welchem mindestens eines der Stromversorgungskabel (17) führbar ist, so dass die Stromversorgungskabel (17) nicht durch die erste Schicht (12) und die Heizmatteneinrichtung (11) hindurch taktil erfassbar sind.

15. Heizkissenvorrichtung nach mindestens einem der vorhergehenden Ansprüche, **dadurch gekennzeichnet, dass** die erste und/oder zweite Schicht durch Kleben auf der Heizmatteneinrichtung aufgebracht sind.

16. Heizkissenvorrichtung nach mindestens einem der vorhergehenden Ansprüche, **dadurch gekennzeichnet, dass** zwischen der ersten und zweiten Schicht (12, 10) mehrere Heizmatteneinrichtungen (11) nebeneinander angeordnet sind.
